(19) Europäisches Patentamt
European Patent Office
Office européen des brevets

(11) **EP 2 867 715 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **13732832.4**

(22) Anmeldetag: **26.06.2013**

(51) Int Cl.:
*G02B 21/00* (2006.01)     *G02B 21/16* (2006.01)
*G02B 21/36* (2006.01)     *G02B 27/09* (2006.01)

(86) Internationale Anmeldenummer:
**PCT/EP2013/001878**

(87) Internationale Veröffentlichungsnummer:
**WO 2014/005682 (09.01.2014 Gazette 2014/02)**

(54) **MIKROSKOP UND VERFAHREN ZUR SPIM MIKROSKOPIE**

MICROSCOPE AND METHOD FOR SPIM MICROSCOPY

MICROSCOPE ET PROCÉDÉ DE MICROSCOPIE SPIM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2012 DE 102012013163**

(43) Veröffentlichungstag der Anmeldung:
**06.05.2015 Patentblatt 2015/19**

(73) Patentinhaber: **Carl Zeiss Microscopy GmbH 07745 Jena (DE)**

(72) Erfinder:
• **SIEBENMORGEN, Jörg**
**07743 Jena (DE)**
• **SINGER, Wolfgang**
**73431 Aalen (DE)**
• **ANHUT, Tiemo**
**07745 Jena (DE)**
• **WOLLESCHENSKY, Ralf**
**07743 Jena (DE)**

(74) Vertreter: **Loritz, Rainer et al**
**Carl Zeiss AG**
**Konzernfunktion Recht und Patente**
**Patentabteilung Jena**
**Carl-Zeiss-Promenade 10**
**07745 Jena (DE)**

(56) Entgegenhaltungen:
**WO-A1-2004/053558     WO-A2-2011/059826**
**US-B1- 6 975 458**

• **EISMANN M T ET AL: "ITERATIVE DESIGN OF A HOLOGRAPHIC BEAMFORMER", APPLIED OPTICS, OPTICAL SOCIETY OF AMERICA, WASHINGTON, DC; US, Bd. 28, Nr. 13, 1. Juli 1989 (1989-07-01), Seiten 2641-2650, XP000032706, ISSN: 0003-6935, DOI: 10.1364/AO.28.002641 in der Anmeldung erwähnt**

**Beschreibung**

Die Erfindung betrifft ein Mikroskop, welches ein Abbildungsobjektiv zur Abbildung einer Probe auf einen Detektor sowie Mittel zur Beleuchtung der Probe mit einem Lichtblatt in der Fokusebene des Abbildungsobjektivs bzw. in einer definierten Ebene in der Nähe der dieser Fokusebene umfasst. Die Mittel zur Beleuchtung umfassen eine kohärentes Licht abstrahlende Beleuchtungsquelle.

Ein Mikroskop, bei dem Beleuchtungsstrahlengang und Detektionsstrahlengang im Wesentlichen senkrecht zueinander angeordnet sind, und bei der die Probe mit einem Lichtblatt in der Fokusebene des Abbildungsobjektivs, d.h. senkrecht zu dessen optischer Achse, beleuchtet wird, ist für die Untersuchung von Proben nach dem Verfahren der Selective-Plane-Illumination-Microscopy (SPIM) ausgelegt. Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die in der Probe enthalten sind oder in diese eingebracht werden, mit Laserlicht angeregt, welches zu einem sogenannten Lichtblatt geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnitts gewonnen. Im Wesentlichen äquivalent zu einer solchen Anregung mit einem statischen Lichtblatt ist die schnelle Hin- und Herbewegung eines dünnen, rotationssymmetrischen Laserstrahls in der Fokusebene des Abbildungsobjektivs. Effektiv, d.h. im zeitlichen Mittel über den Zeitraum der Beobachtung, ergibt sich somit die Form eines Lichtblatts.

Die SPIM-Technologie ist beispielsweise beschrieben in Stelzer et al., Optics Letters 31, 1477 (2006), in Stelzer et al., Science 305, 1007 (2004), in der DE 102 57 423 A1 und in der WO2004/0530558 A1.

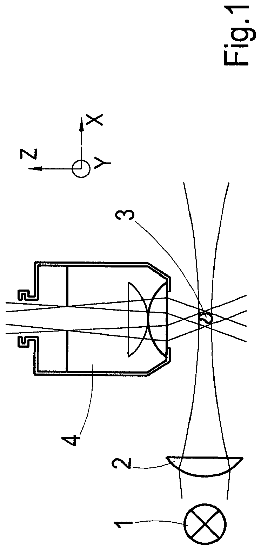

In Fig.1 ist zunächst der grundsätzliche Aufbau eines SPIM-Mikroskops dargestellt. Das Licht einer Beleuchtungsquelle 1 wird über eine Beleuchtungsoptik 2 zu einem Lichtblatt geformt und auf eine Probe 3 gelenkt. Probe und Lichtblatt befinden sich in der Fokusebene eines Abbildungsobjektivs 4. Die optische Achse des Abbildungsobjektivs 4 steht senkrecht zu der Richtung, aus der die Probe 3 beleuchtet wird. Die Beleuchtungsoptik 2 umfasst in der Regel mehrere optische Elemente, die das kohärente Licht der Beleuchtungsquelle 1 kollimieren und daraus ein Lichtblatt formen. Im Stand der Technik umfasst die Beleuchtungsoptik 2 in der Regel auch eine Zylinderlinse, deren flache Seite zur Probe weist und deren gewölbte Seite in Richtung der Beleuchtungsquelle weist. Im Folgenden sollen mehrere Beispiele für Beleuchtungsoptiken 2 erläutert werden, mit denen die Erzeugung eines Lichtblatts mit erhöhter Schärfentiefe und verringertem Schattenwurf gegenüber aus dem Stand der Technik bekannten Anordnungen möglich ist.

Problemstellung:

Gewünscht ist eine Lichtverteilung (das Lichtblatt), die in einer Richtung (der y-Richtung) weniger als $1\mu m$ ausgedehnt ist, jedoch in den beiden anderen Richtungen so weit ausgedehnt ist als möglich, wobei sich in y-Richtung kein Licht oberhalb und unterhalb des Lichtblatts befinden soll. Dieses Licht oberhalb und unterhalb des Lichtblatts würde die Messung aus der Beobachtungsrichtung (y-Richtung) stören.

Bisher bekannte Lösungen sind:

a) Interferenzmuster können in y-Richtung dünn sein und im Prinzip theoretisch in x- und z-Richtung unendlich ausgedehnt, jedoch setzen sie sich in y periodisch fort, so dass sich sehr viel Licht außerhalb des Lichtblatts befindet

b) Besselstrahlen (DE 10 2007 063 274 A1) können theoretisch in z-Richtung unendlich ausgedehnt sein, in y haben sie den gewünschten Durchmesser, jedoch ist erneut sehr viel Leistung in y-Richtung außerhalb des Strahls; scannt man einen Besselstrahl in x-Richtung, erhält man zwar ein Lichtblatt, jedoch mit sehr viel Lichtleistung oberhalb und unterhalb der gewünschten Ebene.

c) Linienfokus mit Zylinderlinse: Mit einer Zylinderlinse kann ein Fokus in x-Richtung erzeugt werden; scannt man durch Defokussierung den Strahl in z-Richtung, so kann man ebenso ein Lichtblatt realisieren.

Eine Zylinderlinse formt aus dem einfallenden kollimierten Laserstrahl einen Linienfokus in x-Richtung (im Abstand f hinter der Zylinderlinse). Dieser kann in z-Richtung verschoben werden (Defokus, realisierbar z.B. durch Änderung der Brennweite f durch eine verschiebbare Linsen oder einen SLM). Dieser Linienfokus hat allerdings eine sehr geringe Ausdehnung in z-Richtung (DOF $\sim \lambda/NA^2$, DOF = Depth of Focus), wobei die Ausdehnung immer geringer wird, je dünner der Linienfokus in y-Richtung wird.

Beispiel: NA = 0.5 → bei λ = 0.488µm folgt DOF ∼ λ/NA$^2$∼ 2µm.

Nachteil der oben genannten Lösungen sind die geringen Ausdehnungen der Einzelstrahlen bzw. die Erfordernis, den Strahl scannen zu müssen. Weiterhin befindet sich beim BesselStrahl in y-Richtung und beim x-Linienfokus in z-Richtung sehr viel Licht, welches die Probe bleichen kann. Weiteres Ziel ist es daher, die Ausdehnungen der Lichtfoki zu vergrößern.

Die Erfindung wird durch die Merkmale der unabhängigen Ansprüche charakterisiert. Bevorzugte Weiterbildungen sind Gegenstand der abhängigen Ansprüche. Die Patentansprüche sind ausdrücklich in die Offenbarung der Erfindung eingeschlossen. Die Erfindung betrifft sowohl ein Mikroskop zur "SPIM" Mikroskopie als auch ein zugehöriges mikroskopisches Verfahren sowie ein Betriebsverfahren für ein Mikroskop sowie die in den Patentansprüchen aufgeführten vorteilhaften Verwendungen von Sinc Filtern und Mathieustrahlen für die SPIM Mikroskopie.

Hierzu wird erfindungsgemäß folgendes vorgeschlagen:

Eine in z-Richtung ausbreitungsinvariante bzw. wohldefinierte Verteilung wird dadurch erhalten, dass man die z-Komponente im Frequenzspektrum des Lichts limitiert. Jede z-Komponente erfährt durch "Ausbreitung" eine andere Phasenverschiebung, weshalb es vorteilhaft ist, die z-Komponenten des Frequenzspektrums mit einer Filterfunktion zu beschränken. Es wird insbesondere vorgeschlagen, als Filterfunktion in z-Richtung eine Sinc(z)-Funktion zu verwenden.

Andere Funktionen sind prinzipiell auch denkbar wie eine Sinc(z)^2Funktion, jedoch bietet die Sinc-Funktion den besonderen Vorteil, ein (idealisiert) konstantes Profil in z zu ermöglichen.

Eine genaue Filterfunktion kann natürlich weiter optimiert werden, die Sinc-Funktion soll insofern hier als besonders vorteilhaft genannt sein für Funktionen, die in z-Richtung über einen größeren Bereich ein näherungsweise konstantes Strahlprofil auf der Achse ermöglichen.

Die Ausdehnung eines Linienfokus kann also erfindungsgemäß in z-Richtung durch einen Sinc(z)-Filter vor der Zylinderlinse vergrößert werden. Der Sinc(z)-Filter wird hierzu in die y-Richtung umtransformiert und als Filter in y-Richtung realisiert. Hierzu ist allerdings ein relativ komplex aufgebauter Filter erforderlich, da die Sinc-Funktion ja positive und negative Werte hat. Ein reiner Amplitudenfilter kann nur positive Werte für die Transmission annehmen. Ein negativer Wert der Transmission des Filters entspricht einer Phasenverschiebung um λ/2. Mit einer zusätzlichen Phasenverschiebung von z.B. λ/2 können jedoch auch negative Werte für die Transmission realisiert werden. In x-Richtung kann die Filterfunktion konstant sein.

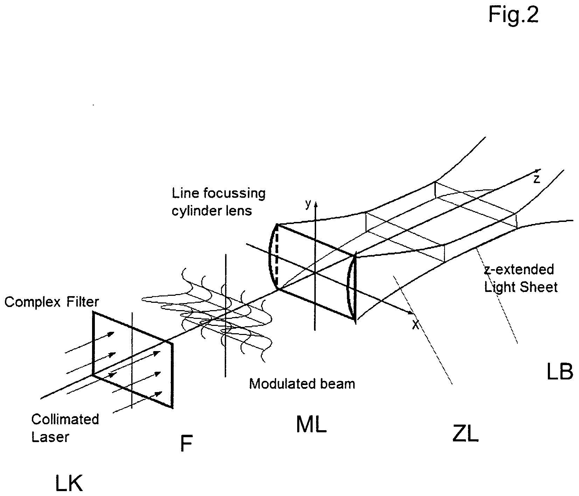

Die Abbildung 2 zeigt ein solches Beispiel für den theoretisch idealen Transmissionsverlauf eines komplexen Filters. Dargestellt ist schematisch ein kollimierter Laserstrahl LK der durch einen in der Pupille einer verwendeten Optik angeordneten Raumfilter F hindurchtritt und von diesem in Amplitude und Phase beeinflusst wird. Die entsprechende räumliche Lichtverteilung ist als modulierter Laserstrahl ML schematisch dargestellt.

Hier ist zunächst ein Raumfrequenzfilter sinc(v$_z$) aufgeprägt.

Eine Zylinderlinse ZL und das erzeugte Lichtblatt LB folgen in Beleuchtungsrichtung. Der sinc(v$_z$) entspricht vorteilhaft einem über die Ewald'sche Gleichung in die v$_y$-Richtung umskalierten Sinc mit Null-Position bei v$_y$ =0 (on axis). Der somit auf die y-Achse projizierte Sinc(v$_z$) sorgt für die Ausdehnung in z-Richtung.

Der in die v$_y$ -Achse projizierte Sinc(v$_z$) limitiert das Strahlprofil allerdings noch nicht ideal in y-Richtung. Überlagert ist der in die y-Richtung projizierte sinc(v$_z$) daher beispielsweise mit einem sinc(v$_y$) (durch Multiplikation); dieser sinc(v$_y$) sorgt dafür, dass das Lichtblatt in y-Richtung begrenzt ist, während der in die v$_y$ -Achse projizierte Sinc(v$_z$) dafür sorgt, dass das Lichtblatt über eine bestimmte z-Entfernung konstant bleibt.

Beide Sinc-Funktionen beeinflussen sich; eine kleine y-Ausdehnung erfordert einen ausgedehnten sinc(v$_y$), der - wie im Beispiel gezeigt - etwa dem projizierten sinc(v$_z$) entsprechen sollte.

Im Beispiel kann somit eine DOF ∼ 8µm erreicht werden. Weitere Beispiele sind auf den folgenden Seiten aufgeführt.

In einem weiteren Beispiel kann das Lichtblatt statt mit einer zylindrischen Optik, die im Wesentlichen entlang der x-Achse konstant ausgebildet ist, auch mit einer gewöhnlichen rotationssymmetrischen Optik mit beispielsweise sphärischen Flächen ausgeführt werden. Die Filterfunktion in z-Richtung (Sinc(v$_z$)) wird als rotationssymmetrische Funktion dann in die x-y Ebene projiziert und mit einer oder zwei weiteren Filterfunktionen in x und y multipliziert, um die gewünschte Begrenzung in y und die gewünschte Ausdehnung in x und z zu erhalten, also beispielsweise mit einer sehr breiten sinc(v$_y$)-funktion in y-Richtung für das dünne Lichtblatt in y-Richtung und eine sehr schmale sinc(v$_x$)-funktion in x-Richtung für die große Ausdehnung in x-Richtung.

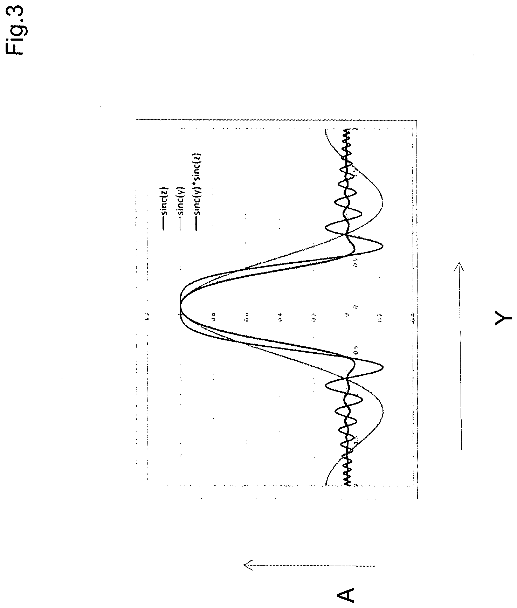

In Figur 3 ist in einem Querschnitt entlang einer Y / Z Schnittfläche entlang der Y Achse von Fig. 2 eine aus drei Filterfunktionen (x,y,z) überlagerte Amplitudenverteilung A beispielhaft dargestellt.

Auf diese Weise ist es überraschend möglich, auch ohne Verwendung einer anamorphotischen Optik wie der dargestellten Zylinderlinse einen ausgedehnten Linienfokus mit einer Fokuslänge von 10µm in z-Richtung bei einer Dicke von etwa 1µm in y (Wellenlänge 0.488µm) zu realisieren (100µm x 10µm x 1µm X x Z x Y).

Ferner kann man ein Lichtblatt mit 100µm x 100µm x 4µm (Breite x mal Tiefe z mal Dicke in y) realisieren.

Auf der Achse (Winkel Null) liegen die Sinc-Funktionen einfach übereinander und "zerstören" sich gegenseitig, d.h. es dominiert immer die jeweilige Sinc-Funktion mit der kleineren Breite (siehe auch Fig. 3).

Um die Sinc-Funktionen voneinander zu trennen, d. h. möglichst viel Frequenzinformation zu übertragen, kann man den Filter außeraxial in einer Objektivpupille anlegen, ideal bei einer möglichst großen Apertur (z.B. bei NA = 0.85 bei einer Objektiv-NA = 1). Somit ist überraschend ein Lichtblatt noch geringerer Dicke möglich, beispielsweise $100\mu$m x $100\mu$m x $2\mu$m (x mal z mal y). Allgemein kann der Nullpunkt der Sinc-Funktionen in der Pupille der Beleuchtungsoptik frei gewählt werden.

Kleinere Lichtblätter mit Durchmesser in y von $1\mu$m sind ebenfalls möglich (z.B. $10\mu$m x $100\mu$m x $1\mu$m XxZxY bei einer Wellenlänge von $0.5\mu$m). Insbesondere können mit dem neuen Filter Lichtblätter mit großen lateralen Ausdehnungen bei gleichzeitiger geringer Dicke in y-Richtung und in y-Richtung wenig Licht außerhalb des Lichtblattes erzeugt werden, die deutlich besser als die aus dem Stand der Technik bekannten Lichtblätter sind, beispielsweise mindestens einen Faktor zwei größere Abmessung in x oder z aufweisen als Gauss-Strahlen, oder mindestens einen Faktor 10 weniger Lichtintensität in y-Richtung außerhalb des Lichtblattes als ein Besselstrahl oder ein Zweistrahl-Interferenzmuster aufweisen.

Die Lichtblätter können auch sowohl in z-Richtung als auch in x-Richtung verlaufen (je nach Position der Filter in der Pupille). Das macht die Anordnung besonders flexibel.

Die Lichtblätter können mit einer Phasenfunktion moduliert werden, um sie in x, y, und z-Richtung zu verschieben (Fokus oder Shift). Damit können die Lichtblätter z.B. auch mit einem SLM (Spatial Light Modulator) durch den Raum bewegt (gescannt) werden. Dieser SLM würde allein oder im Zusammenwirken mit einem Amplitudenfilter eingesetzt werden und eine Verschiebung des Lichtblattes, beispielsweise in y- Richtung, bewirken. Damit ist ein konfokales Scannen durch die Probe mit dem Beobachtungsstrahl z.B. aus y-.Richtung möglich.

Es können weiterhin mehrere Sinc^3-Filter und somit Lichtblätter nebeneinander oder übereinander angeordnet werden. Somit kann die Lichtblattfläche vergrößert werden oder z.B. für STED eine zusätzliche Abregung am Rand einer Anregungsregion stimuliert werden.

Die Lichtblätter können moduliert (strukturiert) werden, indem man z.B. zwei Sinc^3-Filter in der Pupille ohne Defokus oder Phasenverschiebung einbringt. Damit kann die Modulationsfrequenz frei eingestellt werden. Das entstehende Interferenzfeld kann für SIM (ZEISS Elyra S.1) oder ähnliche Verfahren mit strukturierter Beleuchtung genutzt werden. Die Lichtblattdicke kann weiter verringert werden (z.B. $0.7\mu$m), wobei die Ausdehnung des Lichtblatts geringer wird.

Mathematische Formeln und Definitionen:

SINC-Function:

$$\text{sinc(arg)} = \frac{\sin(\pi \cdot \text{arg})}{\pi \cdot \text{arg}}$$

Ewald'sche Gleichung:

$$\nu_z = \sqrt{\left(\frac{n}{\lambda}\right)^2 - \nu_x^2 - \nu_y^2}$$

Off-Axis: with off-axis Position $r\nu_x$:

$$r\nu_z = \sqrt{\left(\frac{n}{\lambda}\right)^2 - r\nu_x^2}$$

Damit

$$\text{arg}_z = \pi \left[\sqrt{\left(\frac{n}{\lambda}\right)^2 - \nu_x^2 - \nu_y^2} - r\nu_z\right]/\Delta_z$$

Spezialfall: on axis Position mit $\nu_x = 0$:

$$\text{arg}_{z,\text{on axis}} = \pi \left[\sqrt{\left(\frac{n}{\lambda}\right)^2 - \nu_x^2 - \nu_y^2} - \frac{n}{\lambda}\right]/\Delta_z$$

$$f_{v_z}(v_x, v_x) = \frac{\sin(\arg_z)}{\arg_z}$$

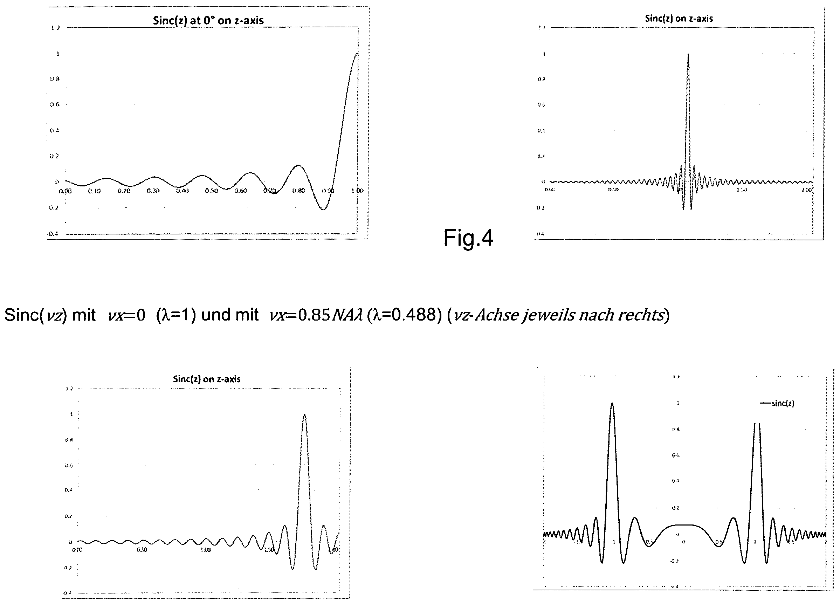

In den nachstehenden Darstellungen gemäß Fig.4 ist rechts oben und links oben jeweils eine erzeugte sinc($v_z$) Funktion entlang der Z Achse mit unterschiedlich gelegtem Maximum dargestellt.
Es wird deutlich dass sich bei mittiger Anordnung des Maximums ein besseres Z Profil ergibt.

Untern links ist beispielhaft Sinc($v_z$) mit $v_x = 0.5 \frac{NA}{\lambda}$ ($\lambda$=0.488) (linkes Bild, $v_z$ - Achse nach rechts) dargestellt und derselbe Sinc($v_z$)-Filter unten rechts projiziert in transversale Koordinaten nach der Ewald'schen Gleichung (rechtes Bild); dieser Verlauf entspricht dem Komplexen Filter in der Pupille, den man einsetzen muss, um den entsprechenden stückweise konstanten Verlauf in z-Richtung zu erhalten.

Diese erfindungsgemäße Umskalierung (Umtransformierung oder Projektion) der sinc($v_z$) Funktion nach der Ewald'schen Gleichung in y Richtung ist überraschend besonders vorteilhaft.

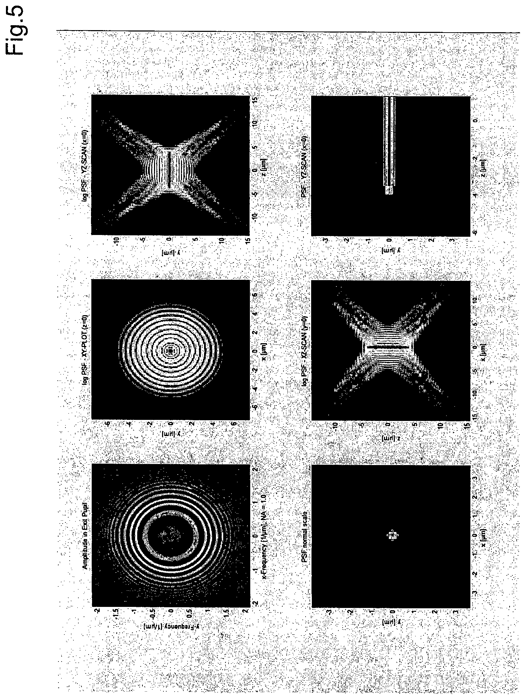

Die Darstellung in Fig. 5 zeigt jeweils zunächst oben links einen Sinc($v_z$)-Filter als komplexen Filter in der Pupille als Schnittbild mit seitlichen Hauptmaxima wie in Fig. 4 unten rechts dargestellt Oben Mitte ist einen Schnitt durch die x-y-Ebene an einer idealen Fokusposition (z = 0) einer Linse (eines Objektives), in deren Pupille der Sinc(z)-Filter angeordnet ist (Point Spread Function PSF des Systems mit Filter) dargestellt, (in logarithmischer Skalierung) und oben rechts der y-z-Verlauf (mit z: entlang der Ausbreitungsrichtung des Lichts).

In der unteren Reihe sind von links nach rechts die obigen Elemente in linearer Skalierung dargestellt, die einer tatsächlichen Lichtverteilung auf der rechten Seite entspricht:

Unten links: Schnitt durch x-y-Ebene (z = 0) - PSF in linearer Skalierung
Unten Mitte: x-z-Verlauf
Unten rechts: y-z-Verlauf, lineare Skalierung, Zoom auf linken Bereich der "Lichtnadel". Deutlich wird dass vorteilhaft über einen ausreichend langen Z- Verlauf ein konstant in Richtung stark begrenzter Strahlverlauf erreicht werden kann.

Genereller Sinc^3-Filter

$$\arg_x = \pi \left[v_x - rv_x\right]/\Delta_x$$

$$\arg_y = \pi \left[v_y - rv_y\right]/\Delta_y$$

$$\arg_{z,\text{off axis}} = \pi \left[\sqrt{\left(\frac{n}{\lambda}\right)^2 - v_x^2 - v_y^2} - rv_z\right]/\Delta_z$$

Complex Filter:

$$F(v_x, v_x) = f_{v_x}(v_x, v_x) \cdot f_{v_y}(v_x, v_x) \cdot f_{v_z}(v_x, v_x) = \frac{\sin(\arg_x)}{\arg_x} \cdot \frac{\sin(\arg_y)}{\arg_y} \cdot \frac{\sin(\arg_z)}{\arg_z}$$

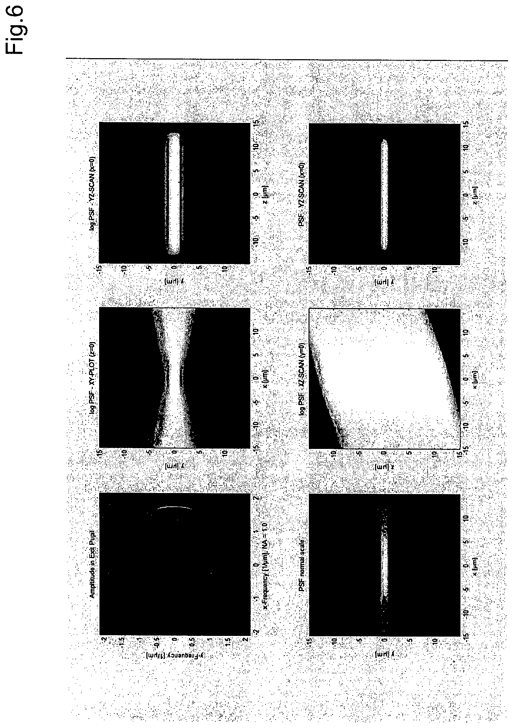

Die Darstellung in Fig. 6 zeigt beispielhaft oben eine einseitige off Axis Funktion in der Pupille gemäß der Erfindung in logarithmischer bzw. linearer Skalierung (links oben und unten), die Beleuchtungssituation im Fokus in X-Y Richtung (Mitte oben) sowie XZ Richtung (Mitte unten) sowie die y/ Z Verteilung des Lichtes in logarithmischer (rechts oben) sowie linearer Skalierung (rechts unten).
In Fig. 7 ist ausschnitthaft ein Beispiel einer aufgeprägten asymmetrischen und einseitigen sinc Funktion FSinc in der Pupille erkennbar

Fig. 8 : Allgemeine Realisierung (beispielhaft):

Der oben beschriebene komplexe Filter kann durch einen einfachen komplexen Filter in der Pupille realisiert

werden (entsprechend F($v_x$, $v_x$)); dann erhält man allerdings eine sehr geringe Transmission, da fast überall F($v_x$, $v_x$) = 0 ist.

Alternativ kann man mit zwei Filtern eine sehr hohe Transmission erreichen. Der Erste Filter 1 ist so ausgelegt, dass er in der Pupille die gewünschte Intensität erzeugt, die der Amplitude des Filters entspricht. Der Filter 1 kann z.B. als CGH (computer generated hologram) ausgelegt und nach bekannten Methoden einfach berechnet und hergestellt werden. Der zweite Filter ist dann (wie unten schematisch angedeutet) ein reines Phasenelement, welches die negativen Werte der Transmission des Komplexen Filters durch einfache Phasensprünge um λ/2 erzeugt.

Die Filter können für einen kollimierten oder jeden beliebigen anderen einfallenden kohärenten Laserstrahl ausgelegt werden.

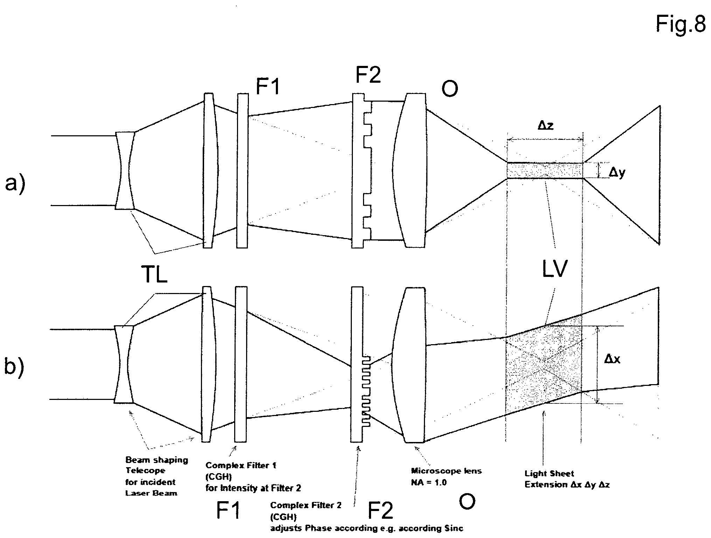

Im Beispiel in Fig.8 ist ein Teil der Brechkraft aus dem ersten Filter in den Kollimator (Beam Shaping Telescope) verlagert.

Die Darstellung in Fig. 8 zeigt in a) einen schematischen Schnitt entlang der Y/Z Ebene und in b) entlang eines X/Z Ebene. Nach einem Element zur Strahlformung (Teleskop TL) folgt in Beleuchtungsrichtung eine Kombination aus einem ersten Filter F1, der ein Amplitudenfilter sein kann und einem zweiten Filter F2 als Phasenfilter, wobei vorteilhaft der zweite Filter F2 in der Eintrittspupille einer Optik O angeordnet ist.

Bei der Optik O kann es sich um ein normales Objektiv handeln.

F1 und F2 können auch beides Phasenfilter sein. Sie erzeugen zusammen eine Lichtverteilung in der Eintrittspupille, die einer dreidimensionalen (X, Y, Z) sinc Funktion als Raumfilterfunktion für die nach dem Lichtdurchgang durch die Optik O entstehende Lichtverteilung entspricht.

Durch diese komplexe Filterfunktion entsteht eine in Z Richtung ausgedehnte flächiger Lichtverteilung LV mit in Y Richtung (senkrecht zur Lichtfläche vorteilhaft sehr geringer Ausdehnung unterhalb eines Bereiches von 5 Mikrometer (sogar bis zu unter 2 Mikrometer!)

Zur Realisierung und Herstellung der obengenannten Filterkombinationen sei ergänzend und beispielhaft auf folgende Literatur verwiesen:

"Iterative design of a holographic beamformer", Eismann, Tai, Cederquist, Applied Optics Vol.28, No.13, 1.July 1989.

Mathieustrahlen

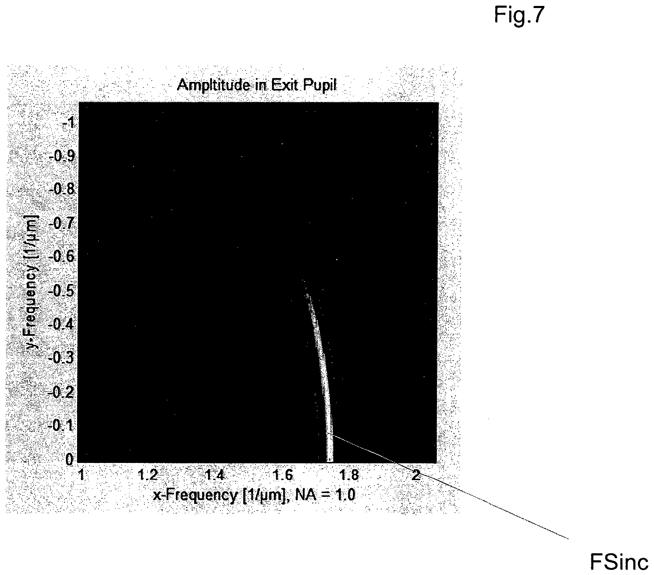

In WO2004/ 053558 (A1) ist neben einer flächigen Beleuchtung durch ein Lichtblatt beschrieben worden, dass ein Lichtblatt durch die scannende Bewegung eines " linienartigen" Punktlichtstrahls (dort Fig. 7) erzeugt werden kann. Hierbei kann eine Relativbewegung zwischen Probe und Beleuchtung durch Bewegung der Probe oder des Lichtstrahles zur Erzeugung eines flächigen Beleuchtungsbereiches erfolgen.

An sich ist die Verwendung vom Mathieustrahlen zur Formung von Beleuchtungsstrahlen eines Barcodescanners aus US2003/0189097 A1 bekannt.

Mathieu-Strahlen sind in z-Richtung nahezu propagationsinvariant; ihr Strahlprofil in der xy-Ebene ist nahezu unabhängig von der z-Position. In z- Richtung ist ein Linienfokus mit ca. 1μm Ausdehnung in y-Richtung möglich. In y-Richtung divergiert der Strahl zwar, dies kann aber unterdrückt werden. Daher kann mit einem Mathieu-Strahl durch Scannen in x-Richtung überraschend ein SPIM Lichtblatt realisiert werden, da sich in Beobachtungsrichtung (y-Richtung) kein störendes Licht innerhalb der Apertur des Beobachtungsstrahls befindet.

Im Frequenzbereich besteht der Mathieu-Strahl aus zwei gegenüberliegenden Frequenzbeiträgen; dies führt zu einer hochfrequenten Modulation des Strahls in x-Richtung. Diese Modulation kann vorteilhaft unterdrückt werden, indem man einen der beiden Frequenzbeiträge blockt, z.B. eine Hälfte der Pupille abblendet bzw. nur eine Hälfte des Mathieu-Spektrums erzeugt.

Zu den physikalischen Grundlagen wird auf "Experimental demonstration of optical Mathieu beams", Optics Communications 195(2001), 35-40 verwiesen:

Nachstehend werden vorteilhafte optische Anordnungen zur Erzeugung von in einer Richtung stark begrenzter Mathieustrahlen beschrieben, wie sie bei der o. g. SPIM Anwendung besonders vorteilhaft Verwendung finden könnten.

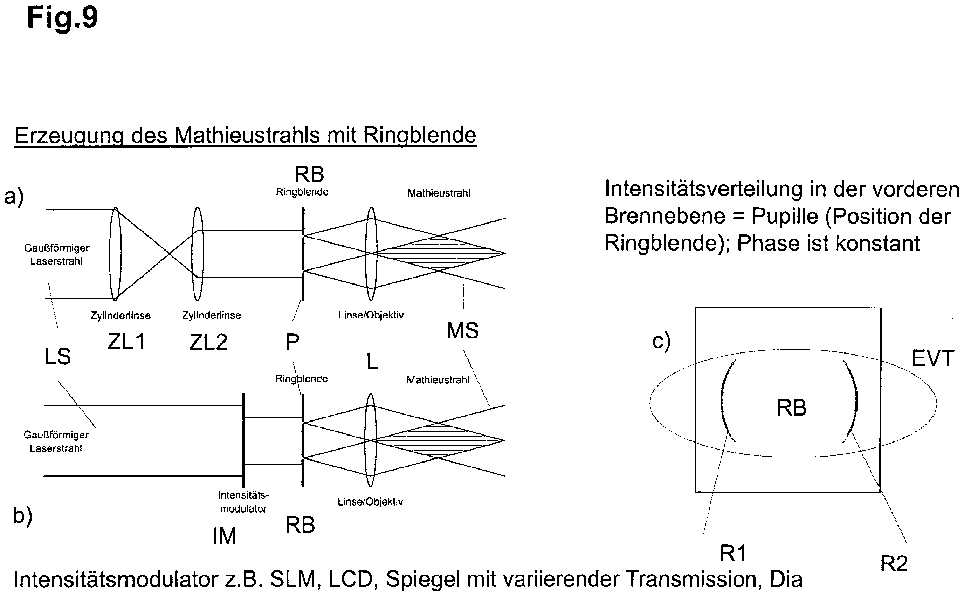

In Fig. 9 a) und b) ist jeweils die Erzeugung eines Mathieustrahls MS aus einem gaußförmigen Laserstrahl LS entlang einer optischen Beleuchtungsachse z schematisch in einem Seitenschnitt in der Z Ebene dargestellt.

Fig. 9 c) zeigt die Beleuchtungsverhältnisse in der vorderen Fokalebene einer Linsenanordnung L, in der eine Ringblende RB angeordnet ist. Die Ringblende muss zur Erzeugung eines Mathieustrahls mit einem elliptischen Gaußstrahl beleuchtet werden. Eine Vorteilhafte Methode, um diese Lichtverteilung zu erzeugen ist in Fig 9a) dargestellt. Die Zylinderlinsenanordnung aus zwei geeigneten Zylinderlinsen ZL1, ZL2 erzeugt hierbei die notwendige elliptische Beleuchtungsverteilung. Beim Durchtritt durch die Ringblende wird die Ringblende nur teilweise von der Beleuchtungsverteilung erfasst und es entstehen zwei symmetrisch halbkreisförmige Anteile R1, R1 in der Pupillenebene, die im weiteren Verlauf nach der Linsenanordnung einen y-begrenzten Mathieustrahl erzeugt.

Blendet man einen der beiden Anteile R1 oder R2 aus, z.B. durch teilweises Schließen der Ringblende, so kann ein in y-Richtung begrenzter Strahl erzeugt werden, der im Gegensatz zum Mathieustrahl keine periodische Struktur aufweist.

Prinzipiell ist es natürlich denkbar statt eines elliptischen Strahlquerschnittes die Ringblende oben und unten abgedeckt zu gestalten um die zwei halbkreisförmigen Bereiche gemäß Fig. 9c zu erzeugen.

In Fig. 9 b ist anstelle einer Strahlformung mit Zylinderlinsen ein flächiger Lichtmodulator wie ein "Spatial Light Modulator" (SLM) nach dem gaußförmigen Laserstrahl angeordnet, der nur die benötigten Bereiche der Ringblende mit Licht beaufschlagen könnte um wiederum wie in Fig. 9a einen Mathieustrahl zu erzeugen.

Prinzipiell könnte aber auch der SLM in der vorderen Brennebene anstelle der Ringblende angeordnet sein und nur die Teilringbereiche, wie in 9c) dargestellt, freigeben.

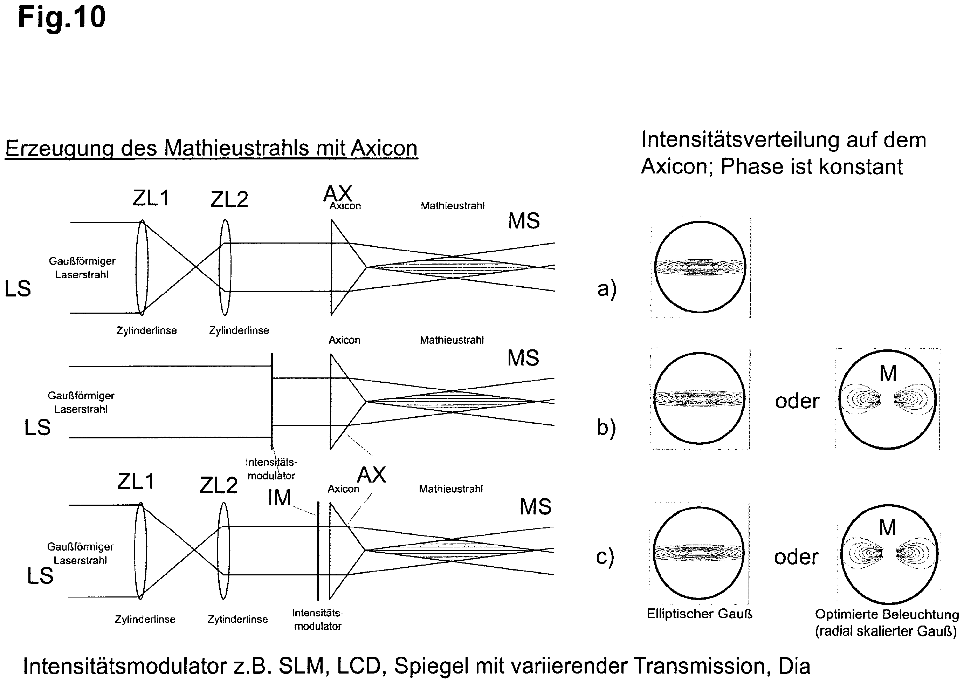

In Fig. 10 a) - c) wird der Mathieustrahl durch ein Axicon AX erzeugt, das einer Zylinderlinsenanordnung (10a), einem Intensitätsmodulator IM (10b) beziehungsweise einer Kombination aus Zylinderlinsenanordnung und Intensitätsmodulator (10c)nachgeordnet ist.

Durch die Zylinderlinsenanordnung wird wiederum eine elliptische Lichtverteilung erzeugt, so dass am Axicon keine ringförmige Lichtverteilung anliegt und damit keine Besselstrahlen sondern Mathieustrahlen erzeugt werden.

In Fig. 10 b übernimmt analog zu Fig. 9 b wiederum ein Intensitätsmodulator IMdiese Strahlformung.

Hier ist der Vorteil, dass durch eine Intensitätsbeeinflussung, die eine radial skalierte elliptische gaußförmige Intensitätsverteilung auf dem Axicon erzeugt ,eine Vermischung aus Besselstrahlen und Mathieustrahlen vermieden werden kann.

In Fig. 10 a - c rechts ist die zu den links nebenstehenden Abbildungen auf dem Axicon ankommende Intensitätsverteilung dargestellt, jeweils links mit einer elliptischen Gaußverteilung und in b) und c) auf der rechten Seite mit einer durch den Lichtmodulator erzeugten radial skalierten elliptischen Gaußverteilung.

Es wird durch IM jeweils ein Mittenbereich der Beleuchtungsverteilung zusätzlich blockiert, wie dargestellt, und nur in den Seitenbereichen eine radial skalierte elliptische Verteilung erzeugt.

Ohne Einschränkung durch die Darstellungen kann durch den IM, SLM oder eine geeignete anamorphotische Optik eine weitere Optimierung der Strahlformung erfolgen.

Weitere Möglichkeiten, einen Mathieustrahl zu erzeugen, bestehen darin, in die vordere Brennebene der Linse L ein Hologramm oder ein diffraktives Element einzubringen und dies mit einem Laser zu beleuchten. Bei Verwendung eines diffraktiven Elements oder eines SLMs kann zusätzlich auch auf die Linse L verzichtet werden.

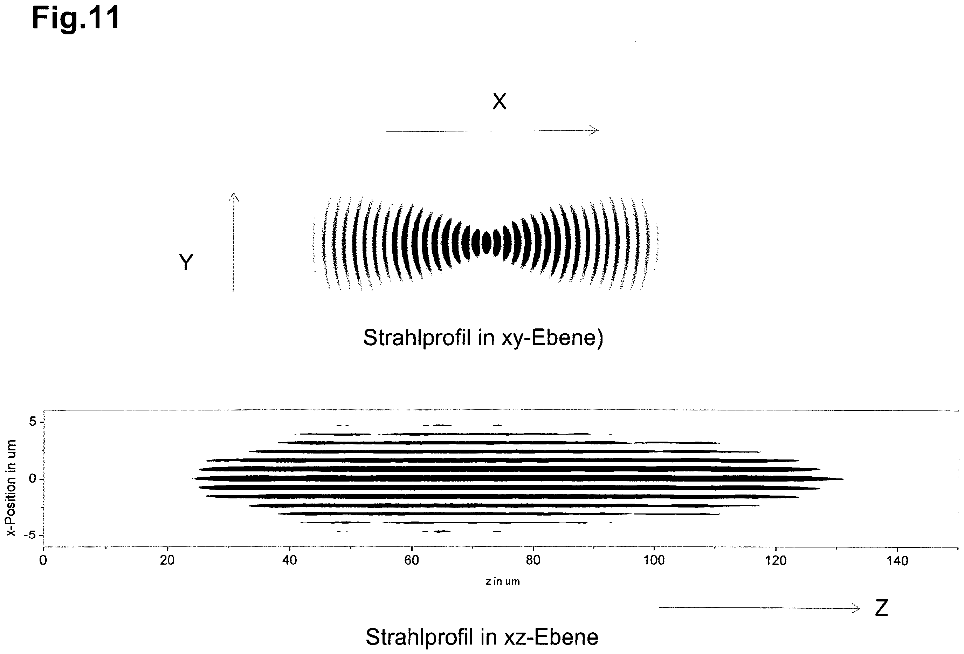

Der Mathieustrahl weist eine hochfrequente Intensitätsmodulation in x-Richtung auf. Somit kann der Strahl genutzt werden, um die axiale Auflösung durch strukturierte Beleuchtung zu erhöhen. Hierbei werden 3 Fluoreszenzbilder der Probe bei einem statischen Mathieustrahl erzeugt, wobei der Strahl bei jedem Bild um jeweils eine Phase von 120° in x-Richtung verschoben wird. Die drei Bilder werden verrechnet, um so ein resultierendes Bild mit erhöhtem Sectioning zu erhalten. In Fig. 11 ist beispielhaft die Beleuchtungsverteilung des erzeugten Mathieustrahles in der XY Ebene an einer Stelle z0 in der optischen Achse bzw. in der XZ Ebene in einem Schnitt entlang der optischen Achse z dargestellt. Deutlich wird eine vorteilhafte Begrenzung des Strahlprofiles in Y Richtung.

Die X Richtung würde der Scanrichtung zur Erzeugung der flächigen Lichtverteilung entsprechen.

**Patentansprüche**

1.  Mikroskop mit

    ◦ einer Abbildungsoptik, die von einer Probe (3) in einen ersten Aperturwinkel abgestrahltes Licht über ein Abbildungsobjektiv (4) in einer ersten Richtung y aufnimmt,
    ◦ einer Detektierungseinrichtung zur Detektierung des von der Probe (3) in den ersten Aperturwinkel abgestrahlten Lichts, welches mit der Abbildungsoptik aufgenommen wird,
    ◦ einer Beleuchtungseinrichtung, umfassend eine Beleuchtungslichtquelle (1) mit einer Wellenlänge λ und einen Beleuchtungsstrahlengang zur Beleuchtung der Probe (3) mit einer Beleuchtungslichtverteilung in einer zweiten Richtung z, wobei die zweite Richtung z im Wesentlichen senkrecht zur ersten Richtung y ist,

    - **dadurch gekennzeichnet, dass** die Beleuchtungseinrichtung Mittel aufweist, so dass

    ◦ innerhalb eines Abschnitts (LZ) in der zweiten Richtung z die Beleuchtungslichtverteilung im Wesentlichen konstant ist,
    ◦ innerhalb des vom ersten Aperturwinkel aufgespannten Kegels außerhalb eines Bereich einer Ausdehnung (LY) in der ersten Richtung y die Leistung des Beleuchtungslichts weniger als 20% beträgt, wobei gilt:

    $LY < 2 \lambda$,
    $LZ > 8 \lambda$,

wobei die Mittel einen zumindest teilweise in oder in der Nähe einer Pupillenebene einer Beleuchtungsoptik angeordneten Filter mit einer Sinc(z)-Filterfunktion zur Limitierung einer z-Komponente im Raumfrequenzspektrum des Beleuchtungslichts umfassen.

2.  Mikroskop nach Anspruch 1, wobei
    die Mittel einen komplexen Filter umfassen, der die Lichtverteilung in eine Pupille der Beleuchtungseinrichtung in einen im wesentlichen kreisrunden Bereich einschränkt

3.  Mikroskop nach Anspruch 1 oder 2, wobei
    der Filter eine Beleuchtungslichtverteilung erzeugt, die in der Pupille der Beleuchtungseinrichtung aus einer Überlagerung von mindestens zwei Sinc-Funktionen besteht.

4.  Mikroskop nach Anspruch 3, wobei
    eine der beiden Sinc-Funktionen einer in eine Ebene projizierten Sinc(z)-Funktion entspricht.

5.  Mikroskop nach Anspruch 4, wobei die Projektion in die x-y-Ebene oder die Projektion in die x-y-Ebene entsprechend der Ewald'schen Gleichung erfolgt.

6.  Mikroskop nach einem der vorangehenden Ansprüche, **dadurch gekennzeichnet, dass** der Filter ein Amplituden- und/ oder Phasenfilter ist.

7.  Mikroskop nach einem der vorhergehenden Ansprüche, wobei der Filter durch Hologramm (CGH) und/oder eine diffraktive Optik realisiert ist
    und/ oder
    der Filter zumindest teilweise durch einen räumlichen Modulator für Licht (SLM) gebildet ist.

8.  Mikroskop nach einem der vorhergehenden Ansprüche, wobei eine Verschiebung des Lichtblattes senkrecht zur Lichtrichtung mit dem SLM möglich ist und/oder
    eine Verschiebung der Fokusebene des Abbildungsobjektives bei Verschiebung des Lichtblattes möglich ist.

9.  Mikroskop nach einem der vorhergehenden Ansprüche, wobei eine asymmetrische Sinc-Funktion/off-axis-Verteilung in der Pupillenebene erzeugt ist.

10. Mikroskop nach einem der vorhergehenden Ansprüche, wobei ein zur optischen Achse außeraxial wirkender sinc-Filter angeordnet ist.

11. Mikroskop nach einem der vorhergehenden Ansprüche, wobei mehrere Sinc-Filter zur Lichtblattstrukturierung überlagert sind.

12. Mikroskop nach einem der vorhergehenden Ansprüche, wobei eine durch Ewald'sche Gleichung umskalierte sinc-Funktion als Filterfunktion realisiert ist.

13. Mikroskop nach einem der vorhergehenden Ansprüche, wobei im Beleuchtungsstrahlengang zur Strahlformung eine Kombination des Filters mit einer anamorphotischen Optik angeordnet ist.

**Claims**

1.  Microscope having

    ◦ an imaging optical unit which receives light emitted by a sample (3) into a first aperture angle via an imaging objective (4) in a first direction y,
    ◦ a detecting apparatus for detecting the light, emitted by the sample (3) into the first aperture angle and received by the imaging optical unit,
    ◦ an illumination apparatus, comprising an illumination light source (1) with a wavelength $\lambda$ and an illumination beam path for illuminating the sample (3) with an illumination light distribution in a second direction z, wherein the second direction z is substantially perpendicular to the first direction y,

- **characterized in that** the illumination apparatus comprises means, such that

◦ the illumination light distribution is substantially constant within a section (LZ) in the second direction z,
◦ the power of the illumination light is less than 20% within the cone, spanned by the first aperture angle, outside a region of an extension (LY) in the first direction y, where:

LY < 2 $\lambda$,
LZ > 8 $\lambda$,

wherein the means comprise a filter, arranged at least partially in or in the vicinity of a pupil plane of an illumination optical unit, with a sinc(z) filter function for limiting a z-component in the spatial frequency spectrum of the illumination light.

2. Microscope according to Claim 1, wherein
the means comprise a complex filter, which restricts the light distribution into a pupil of the illumination apparatus into a substantially circular region.

3. Microscope according to Claim 1 or 2, wherein
the filter generates an illumination light distribution, which comprises a superposition of at least two sinc functions in the pupil of the illumination apparatus.

4. Microscope according to Claim 3, wherein
one of the two sinc functions corresponds to a sinc(z) function projected into a plane.

5. Microscope according to Claim 4, wherein the projection takes place into the x-y plane or into the x-y plane corresponding to the Ewald equation.

6. Microscope according to any of the preceding claims, **characterized in that**
the filter is an amplitude and/or phase filter.

7. Microscope according to any of the preceding claims, wherein the filter is realized by means of a hologram (CGH) and/or a diffractive optical unit
and/ or
the filter is formed at least partially by means of a spatial light modulator (SLM).

8. Microscope according to any of the preceding claims, wherein a displacement of the light sheet perpendicular to the light direction is possible with the SLM and/or
a displacement of the focal plane of the imaging objective is possible when the light sheet is displaced.

9. Microscope according to any of the preceding claims, wherein an asymmetric sinc function/off-axis distribution is generated in the pupil plane.

10. Microscope according to any of the preceding claims, wherein a sinc filter, acting off-axis with respect to the optical axis, is arranged.

11. Microscope according to any of the preceding claims, wherein a plurality of sinc filters for light sheet structuring are superposed.

12. Microscope according to any of the preceding claims, wherein a sinc function, rescaled by the Ewald equation, is realized as a filter function.

13. Microscope according to any of the preceding claims, wherein a combination of the filter with an anamorphic optical unit is arranged in the illumination beam path, for beam shaping.

**Revendications**

1. Microscope, comprenant

◦ une optique de reproduction, laquelle reçoit la lumière rayonnée par un échantillon (3) dans un premier angle d'ouverture par le biais d'un objectif de reproduction (4) dans une première direction y,
◦ un dispositif de détection destiné à détecter la lumière rayonnée par l'échantillon (3) dans le premier angle d'ouverture, laquelle a été reçue par l'optique de reproduction,
◦ un dispositif d'éclairage, comprenant une source de lumière d'éclairage (1) ayant une longueur d'onde λ et un trajet de rayon d'éclairage destiné à éclairer l'échantillon (3) avec une distribution de la lumière d'éclairage dans une deuxième direction z, la deuxième direction z étant sensiblement perpendiculaire à la première direction y,

- **caractérisé en ce que** le dispositif d'éclairage possède des moyens de telle sorte que

◦ à l'intérieur d'une portion (LZ) dans la deuxième direction z, la distribution de la lumière d'éclairage est sensiblement constante,
◦ à l'intérieur d'un cône couvert par le premier angle d'ouverture, en-dehors d'une zone d'une expansion (LY) dans la première direction y, la puissance de la lumière d'éclairage est inférieure à 20 %, les relations suivantes s'appliquant :

LY < 2 λ,
LZ > 8 λ,

les moyens comportant un filtre, disposé au moins partiellement ou à proximité d'un plan pupillaire d'une optique d'éclairage, ayant une fonction de filtrage Sinc(z) destinée à limiter une composante z dans le spectre de fréquences spatial de la lumière d'éclairage.

2.  Microscope selon la revendication 1, les moyens comportant un filtre complexe qui limite la distribution de la lumière dans une pupille du dispositif d'éclairage dans une zone sensiblement ronde circulaire.

3.  Microscope selon la revendication 1 ou 2, le filtre générant une distribution de la lumière d'éclairage qui, dans la pupille du dispositif d'éclairage, se compose d'une superposition d'au moins deux fonctions Sinc.

4.  Microscope selon la revendication 3, l'une des deux fonctions Sinc correspondant à une fonction Sinc(z) projetée dans un plan.

5.  Microscope selon la revendication 4, la projection s'effectuant dans le plan x-y ou la projection dans le plan x-y s'effectuant conformément à une équation d'Ewald.

6.  Microscope selon l'une des revendications précédentes, **caractérisé en ce que** le filtre est un filtre d'amplitude et/ou de phase.

7.  Microscope selon l'une des revendications précédentes, le filtre étant réalisé par un hologramme (CGH) et/ou par une optique diffractive
    et/ou
    le filtre étant au moins partiellement formé par un modulateur spatial pour la lumière (SLM).

8.  Microscope selon l'une des revendications précédentes, un décalage de la lame de lumière perpendiculairement à la direction de la lumière étant possible avec le SLM et/ou
    un décalage du plan focal de l'objectif de reproduction étant possible lors du décalage de la lame de lumière.

9.  Microscope selon l'une des revendications précédentes, une fonction Sinc asymétrique / distribution désaxée étant générée dans le plan pupillaire.

10. Microscope selon l'une des revendications précédentes, un filtre Sinc agissant de manière désaxée par rapport à l'axe optique étant monté.

11. Microscope selon l'une des revendications précédentes, plusieurs filtres Sinc étant superposés en vue de la structuration de la lame de lumière.

12. Microscope selon l'une des revendications précédentes, une fonction Sinc à l'échelle modifiée par l'équation d'Ewald étant réalisée en tant que fonction de filtrage.

13. Microscope selon l'une des revendications précédentes, une combinaison du filtre avec une optique anamorphique étant disposée dans le trajet du rayon d'éclairage en vue de former le rayon.

Fig.1

## Fig.2

Complex Filter
Collimated Laser
Line focussing cylinder lens
Modulated beam
z-extended Light Sheet
LK
F
ML
ZL
LB

Fig.3

Fig.4

Sinc(*vz*) mit *vx*=0 (λ=1) und mit *vx*=0.85 *NAλ* (λ=0.488) (*vz*-Achse jeweils nach rechts)

Fig.5

Fig.6

Fig.7

Fig.8

a)

b)

F1   F2   O

Δz

Δy

TL

LV

Δx

Beam shaping
Telecope
for incident
Laser Beam

Complex Filter 1
(CGH)
for intensity at Filter 2

Complex Filter 2
(CGH)
adjusts Phase according e.g. according Sinc

F1

F2

Microscope lens
NA = 1.0

O

Light Sheet
Extension Δx Δy Δz

EP 2 867 715 B1

# Fig.9

Erzeugung des Mathieustrahls mit Ringblende

a) Gaußförmiger Laserstrahl — LS — Zylinderlinse ZL1 — Zylinderlinse ZL2 — Ringblende RB — P — Linse/Objektiv L — Mathieustrahl MS

b) Gaußförmiger Laserstrahl — Intensitätsmodulator IM — Ringblende RB — Linse/Objektiv L — Mathieustrahl MS

Intensitätsmodulator z.B. SLM, LCD, Spiegel mit variierender Transmission, Dia

Intensitätsverteilung in der vorderen Brennebene = Pupille (Position der Ringblende); Phase ist konstant

c) EVT — RB — R1 — R2

# Fig.10

Erzeugung des Mathieustrahls mit Axicon

Intensitätsverteilung auf dem Axicon; Phase ist konstant

a)

b) oder

c) oder

Elliptischer Gauß

Optimierte Beleuchtung (radial skalierter Gauß)

Intensitätsmodulator z.B. SLM, LCD, Spiegel mit variierender Transmission, Dia

EP 2 867 715 B1

# Fig.11

X
$\longrightarrow$

Y
↑

Strahlprofil in xy-Ebene)

EP 2 867 715 B1

z in um

Z
$\longrightarrow$

Strahlprofil in xz-Ebene

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10257423 A1
- WO 20040530558 A1
- DE 102007063274 A1
- WO 2004053558 A1
- US 20030189097 A1

**In der Beschreibung aufgeführte Nicht-Patentliteratur**

- **STELZER et al.** *Optics Letters,* 2006, vol. 31, 1477
- **STELZER et al.** *Science,* 2004, vol. 305, 1007
- **EISMANN ; TAI ; CEDERQUIST.** Iterative design of a holographic beamformer. *Applied Optics,* 01. Juli 1989, vol. 28 (13
- Experimental demonstration of optical Mathieu beams. *Optics Communications,* 2001, vol. 195, 35-40